# EUROPÄISCHE PATENTANMELDUNG

(11) **EP 4 378 559 A1**
(43) Veröffentlichungstag der Anmeldung: **05.06.2024**
(21) Anmeldenummer: 23217397.1
(22) Anmeldetag: 26.10.2018
(51) Int. Cl.: B01D 39/20, B01D 17/04

(54) **KOALESZENZABSCHEIDER, INSBESONDERE ZUR VERWENDUNG IN EINEM KURBELGEHÄUSEENTLÜFTUNGSSYSTEM, KURBELGEHÄUSEENTLÜFTUNGSSYSTEM SOWIE VERWENDUNG EINES KOALESZENZABSCHEIDERS**

(30) Priorität: 27.10.2017 DE 102017010021
(62) Teilanmeldung aus: 18795512.5
(71) Anmelder: MANN+HUMMEL GmbH, 71636 Ludwigsburg (DE)
(72) Erfinder: GREIN, Thomas, 76344 Eggenstein-Leopoldshafen (DE); ZÜRKER, Markus, 67373 Dudenhofen (DE)
(74) Vertreter: Mann + Hummel Intellectual Property

(57) **Zusammenfassung**

Die Erfindung betrifft einen Koaleszenzabscheider zur Abscheidung von Flüssigkeitströpfchen aus einem Gasstrom, insbesondere zur Abscheidung von Öl aus einem Kurbelgehäusegasstrom, umfassend einen Gaseinlass, einen Gasauslass und einen zwischen dem Gaseinlass und dem Gasauslass angeordneten Mehrlagenaufbau eines Koaleszenzfiltermediums, dadurch gekennzeichnet, dass das Koaleszenzfiltermedium ein insbesondere nassgelegtes Glasfaserpapier mit einer Einzellagendicke von mehr als 0.8 mm und maximal 5 mm, einer Flächenmasse der Einzellage von größer 80 g/m² und kleiner 500 g/m² und eine Luftdurchlässigkeit der Einzellage von 350 bis 1800 l/m²s aufweist.

## Beschreibung

### Technisches Gebiet

Die Erfindung betrifft einen Koaleszenzabscheider nach dem Oberbegriff des Anspruchs 1, dessen Verwendung in einem Kurbelgehäuseentlüftungssystem und ein Kurbelgehäuseentlüftungssystem.

### Stand der Technik

Bei Hubkolbenverbrennungsmotoren entsteht im Kurbelgehäuse ein ölhaltiges, insbesondere Ölaerosole enthaltendes Leckagegas - das sog. Blow-By-Gas. Seine Zurückführung in den Verbrennungsprozess ist in vielen Ländern inzwischen gesetzlich vorgeschrieben und erfolgt in sog. geschlossenen K[urbel]G[ehäuse]E[ntlüf-tungs]-Systemen, wie beispielsweise aus der DE102016005357 A1 bekannt. Zu den wichtigsten Aufgaben eines K[urbel]G[ehäuse]E[ntlüftungs]-Systems gehören die Ölabscheidung und Ölrückführung in das Kurbelgehäuse sowie die Regelung des Kurbelgehäusedrucks. Dazu können in derartigen Systemen zur Abscheidung von Aerosolen, hauptsächlich von Ölaerosolen, neben Trägheitsabscheidern auch Koaleszenzabscheider eingesetzt werden. Die Anforderungen an die Ölabscheidung ist dabei in den vergangenen Jahren mit der strenger werdenden Abgasgesetzgebung stetig gestiegen, um emissionsrelevante Motorkomponenten wie Abgasturbolader, Ladeluftkühler oder Sensoren vor einem Leistungsverlust oder Versagen durch Ölkontamination zu schützen. Dies ist zunehmend von Bedeutung, insbesondere in geschlossenen KGE-Systemen, da Kurbelgehäusegase nicht in die Umgebung abgelassen, sondern wieder dem Verbrennungsprozess zugeführt werden. Somit liegt die Bedeutung der Ölabscheidung nicht allein in der Minimierung des Ölverbrauchs, sondern sie leistet heute vor allem einen wesentlichen Beitrag zur Einhaltung der Abgasgesetzgebung und Funktion wesentlicher Komponenten über die Fahrzeuglebensdauer.

Es ist bekannt, für derartige Anwendungen Koaleszenzfiltermedien (auch genannt Koaleszierfiltermedien) zu verwenden. Derartige Filtermedien sind dem Fachmann bekannt als bahnförmige Halbzeuge, die in Endlosprozessen hergestellt (beispielsweise Papier-, Spinn- oder Vliesprozesse) und in Rollenform geliefert und von der Rolle verarbeitet werden. In zur Flüssigkeitsabscheidung verwendeten Koaleszenzfiltermedien verfangen sich Öltröpfchen an den Fasern und verbinden sich zu grö-ßeren Tröpfchen, die dann durch Schwerkraft abdrainieren. Bekannt sind hierfür Mischfiltermedien im Massegewichtsbereich von ca. 60-70 g/m², die in der Regel grobe Kunststofffasern und zwischen 10 und 60% Glasfasern enthalten, wobei die Kunststofffasern vorwiegend strukturelle Funktion haben und die feineren Glasfasern eine effiziente Abscheidewirkung erzeugen sollen. Hierbei werden beispielsweise Schmelzverfestigungsprozesse zum Binden von Glas- und Kunststofffasern eingesetzt. Ein weiteres Koaleszenzfiltermedium ist aus WO 2015/079394 A1 bekannt.

Der Erfindung liegt die Aufgabe zugrunde, einen Koaleszenzabscheider der vorstehend genannten Art so weiterzubilden, dass dessen Funktion optimiert wird, insbesondere dass der Druckverlust des Koaleszenzabscheiders verbessert wird.

### Offenbarung der Erfindung

Diese Aufgabe wird durch einen Koaleszenzabscheider nach dem Oberbegriff des Anspruchs 1, sowie dessen Verwendung in einem insbesondere geschlossenen Kurbelgehäuseentlüftungssystem einer Brennkraftmaschine, bevorzugt ohne weiteren Feinabscheider oder weitere Feinabscheidelage, gelöst.

Mithin basiert die Erfindung darauf, einen Mehrlagenaufbau aus einem nassgelegten Glasfaserpapier zur Ölabscheidung zu verwenden. Der erfindungsgemäße Mehrlagenaufbau mit seiner offenen Struktur kann überraschend als effizienter Endabscheider bzw. als einzige Abscheidestufe eingesetzt werden, insbesondere sind zusätzlich zu dem im Mehrlagenaufbau verwendeten Glasfaserpapier keine weiteren Feinabscheidestufen oder Feinabscheidelagen erforderlich.

Der Koaleszenzabscheider dient zur Abscheidung von Flüssigkeitströpfchen aus einem Gasstrom, insbesondere zur Abscheidung von Öl aus einem Gasstrom, bevorzugt zur Abscheidung von Öltröpfchen aus Kurbelgehäusegas. Der Koaleszenzabscheider umfasst bevorzugt einen Gaseinlass, einen Gasauslass und einen zwischen dem Gaseinlass und dem Gasauslass angeordneten Filterkörper. Als Filterkörper wird bevorzugt ein Mehrlagenaufbau eines Koaleszenzfiltermediums verwendet, wobei als Koaleszenzfiltermedium ein insbesondere nassgelegtes Glasfaserpapier verwendet wird. Das Koaleszenzfiltermedium weist bevorzugt eine Einzellagendicke von mehr als 0.8 mm und weiter bevorzugt maximal 5 mm auf. Das Koaleszenzfiltermedium weist bevorzugt eine Flächenmasse der Einzellage von größer 80 g/m², bevorzugt größer 100 g/m², besonders bevorzugt größer 180 g/m² und weiter bevorzugt kleiner 500 g/m² auf. Das Koaleszenzfiltermedium weist bevorzugt eine Luftdurchlässigkeit der Einzellage von 350-1.800 l/m²s auf.

In einer bevorzugten Ausführungsform weist der Mehrlagenaufbau zwischen 2 und 80 bevorzugt unmittelbar aufeinander angeordnete Lagen des Koaleszenzfiltermediums auf, die entweder gestapelt oder gewickelt sind. Bevorzugt werden zwischen 2 und 40, besonders bevorzugt zwischen 4 und 40 und optimal zwischen 4 und 20 Lagen verwendet. Die aufeinander gestapelten Lagen bilden vorteilhaft als Einheit die für die Flüssigkeitsabscheidung maßgebliche Struktur. Dabei aber auch unabhängig davon ist weiter bevorzugt die feinste Abscheidestufe des Koaleszenzabscheiders durch den Mehrlagenaufbau und/oder das Koaleszenzfiltermedium gebildet. Die durch das Koaleszenzfiltermedium gebildete Struktur weist den Vorteil auf, dass insbesondere trotz der sehr offenen Struktur eine für die Anwendung ausreichende Abscheidewirkung erzielt werden kann, weswegen kein stromab angeordneter Feinabscheider- oder Endabscheider und/oder keine zusätzlich zum Koaleszenzfiltermedium im Mehrlagenaufbau eingebrachte, feinere Feinabscheidelage erforderlich ist, um eine für die Anwendung ausreichende Abscheidung zu erreichen. Mehrlagenaufbauten, welche außer dem Koaleszenzfiltermedium keine im Mehrlagenaufbau eingebrachte, feinere (Fein-) abscheidelagen (d.h. feiner als das Koaleszenzfiltermedium) aufweisen, werden als zwischenschichtfrei bezeichnet.

In einer bevorzugten Ausführungsform ist daher vorgesehen, dass der Mehrlagenaufbau und/oder das Koaleszenzfiltermedium die die Effizienz des Koaleszenzabscheiders bestimmende Abscheidestufe bilden. Der Mehrlagenaufbau ist somit anders formuliert bevorzugt zwischenschichtfrei.

In einer bevorzugten Ausführungsform das Koaleszenzfiltermedium einschichtig, wobei die eine Schicht bevorzugt homogen ist.

In einer bevorzugten Ausführungsform ist das Koaleszenzfiltermedium einschichtig, d.h. es weist keine Verbundstruktur mit zwei oder mehreren beispielsweise aufeinander laminierten abscheidewirksamen Lagen auf. Das bedeutet, dass das Koaleszenzfiltermedium als solches, d.h. als bahnförmige Lage, die in der Regel von einer Rolle abgerollt wird, nicht schon vor dem Aufbau eines Mehrlagenaufbaus aus diesem Filtermedium eine mehrschichtige Verbundstruktur aus verschiedenartigen abscheidewirksamen Schichten aufweist. Ein Beispiel hierfür wäre ein Glasfaserpapier mit aufkaschierter Nanofaserlage oder Ähnliches. So kann ein Mehrlagenaufbau aus mehreren aufeinander angeordneten Lagen des Koaleszenzfiltermediums mit in Durchströmungsrichtung vergleichsweise homogenem, abscheidewirksamem Aufbau bereitgestellt werden. Weiter bevorzugt ist das Koaleszenzfiltermedium homogen, d.h. in sich homogen. Dies bedeutet, dass das Koaleszenzfiltermedium keine über ein Normalmaß hinausgehende Gradientenstruktur aufweist, die beispielsweise durch Verfahrensmodifikationen hervorgerufen werden könnten, die eine verfahrensbedingte, minimale, durch das Papierverfahren vorgegebene Gradientenstruktur verstärken würden. Soliditätsunterschiede zwischen oberer und unterer Hälfte der Koaleszenzfiltermediumlage liegen bevorzugt in einem Bereich von geringer 30%. Als Solidität wird der vom Feststoff belegte Volumenanteil verstanden.

In einer Ausführungsform beträgt die Gesamtflächenmasse des Mehrlagenaufbaus (d.h. die Flächenmasse der Einzellage des Koaleszenzfiltermediums multipliziert mit der Lagenanzahl) mindestens 500 g/m², bevorzugt mindestens 760 g/m², besonders bevorzugt mindestens 1.000 g/m². Ferner beträgt die Gesamtflächenmasse des Mehrlagenaufbaus in einer Ausführungsform maximal 10.200 g/m², bevorzugt maximal 8.000 g/m², besonders bevorzugt maximal 5.100 g/m². In diesem Bereich kann ein anwendungsbezogen guter Abscheidegrad vom im Kurbelgehäusegas enthaltenen Öl erreicht werden.

In einer bevorzugten Ausführungsform liegt die Gesamtluftdurchlässigkeit des Mehrlagenaufbaus kleiner 350 l/m²s und größer 15 l/m²s, bevorzugt zwischen 200 und 15 l/m²s, besonders bevorzugt zwischen 180 und 30 l/m²s. Hierdurch kann bei ausreichender Abscheideleistung ein möglichst geringer Druckverlust realisiert werden.

In einer bevorzugten Ausführungsform beträgt das Produkt aus Luftdurchlässigkeit und Flächenmasse einer Einzellage des Koaleszenzfiltermediums zwischen 110 und 220 g/m*s, bevorzugt zwischen 140 und 180 g/m*s. Es hat sich herausgestellt, dass in diesem Bereich eine gute Abscheideleistung bei nicht zu hohem Druckverlust an der Einzellage erreichbar ist.

In einer Ausführungsform werden für den Mehrlagenaufbau zwei oder mehr verschiedenartige Koaleszenzfiltermediumlagen eingesetzt, wobei jedoch jede der Lagen eine Einzellagendicke von mehr als 0.8 mm und maximal 5 mm, einer Flächenmasse der Einzellage von größer 80 g/m² und kleiner 500 g/m² und eine Luftdurchlässigkeit der Einzellage von 350-1800 l/m²s aufweist, wobei besonders bevorzugt ist, dass jede der Lagen ein Produkt aus Luftdurchlässigkeit und Flächenmasse der Einzellage des Koaleszenzfiltermediums zwischen 110 und 220 g/m*s, bevorzugt zwischen 140 und 180 g/m*s aufweist, wobei ferner bevorzugt die Produkte aus Luftdurchlässigkeit und Flächenmasse zumindest innerhalb eines Bereichs von +/- 10% übereinstimmen. Hierbei können insbesondere Koaleszenzfiltermediumlagen mit verschiedenen Flächengewichte, insbesondere innerhalb des Bereiches von größer 80 g/m², bevorzugt größer 100 g/m², besonders bevorzugt größer 180 g/m² und weiter bevorzugt kleiner 500 g/m², kombiniert werden, um eine für die jeweilige Anwendung optimale Auslegung hinsichtlich Druckverlust und Abscheidegrad einzustellen.

In einer bevorzugten Ausführungsform beträgt der Massenanteil der Glasfasern im Koaleszenzfiltermedium mindestens 90%, bevorzugt mindestens 93%, besonders bevorzugt mindestens 95%.

In einer bevorzugten Ausführungsform beträgt der Masseanteil veraschbarer Materialien im Koaleszenzfiltermedium max. 10%, bevorzugt max. 7%, besonders bevorzugt max. 5%. Veraschbare Materialien stellen in der Regel den über den Glasfaseranteil hinausgehenden Rest dar und können Binder, Imprägnierungen und/ oder Kunststofffasern enthalten.

Ein großer Anteil der Glasfasern an der Gesamtmasse hat den Vorteil, dass nahezu der gesamte Massenanteil einen hohen Beitrag zur Abscheideleistung hat, wohingegen bei Mischfasermedien in der Regel der Kunststofffaseranteil im Vergleich zum Glasfaseranteil einen geringeren Beitrag zur Abscheideleistung bietet. Ein derart hoher Glasfaseranteil hat ferner den Vorteil, dass ein besonders differenzdruckstabiles Koaleszenzfiltermedium erzielbar ist, welches unter Druck nur eine geringe Verformung und damit nur eine geringe Änderung des Abscheideverhaltens und Druckverlustes erfährt. Ferner erlaubt ein hoher Glasfaseranteil eine relativ zur Flächenmasse besonders offenporige Struktur. Ein hoher Glasfaseranteil kann ferner vorteilhaft für die chemische Stabilität sein.

In einer bevorzugten Ausführungsform ist vorgesehen, dass das Koaleszenzfiltermedium einen Binder mit einem Masseanteil von max. 10%, bevorzugt max. 7%, besonders bevorzugt max. 5% aufweist, der bevorzugt keine Zweikomponentenfasern, besonders bevorzugt keine Schmelzfasern aufweist und beispielsweise ein Acrylatbinder ist. Ein geringer Binder/Schmelzfaseranteil trägt dazu bei, dass ein möglichst großer Teil der Fasern optimal zur Abscheidewirkung beiträgt. Ein geringerer Binderanteil reduziert die Gefahr, dass in möglichst geringer Zahl einzelne Poren durch Binder verschlossen werden. Generell bevorzugt ist ein Verzicht auf strukturbildende, d. h. eine Trägermatrix für feinere, abscheidewirksame Glasfasern bildende Polymerfasern, insbesondere Schmelzfasern.

In einer bevorzugten Ausführungsform ist vorgesehen, dass die Flächenmasse der Einzellage des Koaleszenzfiltermediums größer 150 g/m², bevorzugt größer 180 g/m² beträgt. Dies trägt zu einer guten Verarbeitbarkeit des Koaleszenzfiltermediums zum Mehrlagenaufbau bei.

In einer bevorzugten Ausführungsform ist vorgesehen, dass die Luftdurchlässigkeit der Einzellage des Koaleszenzfiltermediums mindestens 350 l/m²s, bevorzugt mindestens 600 l/m²s beträgt. Es hat sich herausgestellt, dass auch ein derart permeables Koaleszenzfiltermedium eine für die Anwendung bei KGE-Ölabscheidern ausreichende Abscheidung bereitstellen kann.

Bevorzugt beträgt die Luftdurchlässigkeit der Einzellage des Koaleszenzfiltermediums kleiner 1700 l/m²s.

Insbesondere für gewickelte Mehrlagenaufbauten hat sich eine Luftdurchlässigkeit der Einzellage im Bereich von größer 600 l/m²s bevorzugt in Verbindung mit einer Flächenmasse von kleiner 260 g/m² erwiesen. Besonders bevorzugt ist dabei eine maximale Luftdurchlässigkeit der Einzellage von kleiner 900 l/m²s bevorzugt in Verbindung mit einer Flächenmasse von mindestens 180 g/m².

In einer bevorzugten Ausführungsform weisen mindestens 90%, bevorzugt mindestens 95% der Glasfasern des Koaleszenzfiltermediums einen Faserdurchmesser größer 2,5µm, bevorzugt größer 3µm auf.

Ferner bevorzugt ist ein Koaleszenzabscheider, bei welchem mindestens 90% der Glasfasern des Koaleszenzfiltermediums einen Faserdurchmesser kleiner 10µm, bevorzugt kleiner 8µm aufweisen. Die Begrenzung des Anteils grober Fasern mit Durchmesser größer 10 µm, idealerweise mindestens auf einen Anteil nicht größer als 10%, trägt zum Erreichen eines verbesserten Anteils sowohl abscheidewirksamer als auch den Druckverlust in vergleichsweise geringem Maße erhöhender Fasern bei.

In einer bevorzugten Ausführungsform ist vorgesehen, dass mindestens 90% der im Koaleszenzfiltermediums enthaltenen Glasfasern des Koaleszenzfiltermediums einen Faserdurchmesser größer 2,5 µm, bevorzugt zwischen 2,5 und 8 µm, aufweisen. Besonders bevorzugt ist, dass mindestens 90% der im Koaleszenzfiltermedium enthaltenen Glasfasern des Koaleszenzfiltermediums einen Faserdurchmesser zwischen 3 µm oder 3,5 µm und 7,5 µm aufweisen. Unabhängig davon aber auch besonders bei dem genannten Gesamtbereich vorteilhaft ist es ferner, wenn die Glasfasern des Koaleszenzfiltermediums einen mittleren Faserdurchmesser (d50) zwischen 4 und 6 µm, bevorzugt zwischen 4,5 und 6 µm, besonders bevorzugt zwischen 5 und 6 µm aufweisen. Auf diese Weise können hinsichtlich Abscheidewirkung, Druckverlust und Stabilität des Koaleszenzfiltermediums jeweils gute Eigenschaften erreicht werden. Die besonders bevorzugte Auslegung mit enger Toleranz zwischen 5 und 6 µm stellt dabei das Optimum dar.

Es hat sich herausgestellt, dass ein geringer Anteil von Glasfasern im Durchmesserbereich kleiner 3µm, d.h. ein Anteil von kleiner 10%, bevorzugt kleiner 5%, insbesondere bei einem hohen Gesamtanteil von Glasfasern im Koaleszenzfiltermedium, auch bei einer im Vergleich zu anderen im KGE-Bereich verwendeten Medien gröberen abscheidewirksamen Struktur hohe Abscheidegrade ermöglichen und gleichzeitig große Vorteile hinsichtlich des Druckverlustes und damit Energieeinsparungen bieten kann.

Die Erfindung betrifft ferner die Verwendung eines vorbeschriebenen Koaleszenzabscheiders in einem insbesondere geschlossenen Kurbelgehäuseentlüftungssystem einer Brennkraftmaschine, bevorzugt ohne weiteren Feinabscheider oder weitere Feinabscheidelage, d.h. bevorzugt bildet der vorbeschriebene Koaleszenzabscheider den feinsten Ölabscheider im KGE-System.

Ein erfindungsgemäßes Kurbelgehäuseentlüftungssystem umfasst einen vorbeschriebenen Koaleszenzabscheider. Weiter bevorzugt ist das Kurbelgehäuseentlüftungssystem geschlossen, d.h. im Betrieb findet eine Rückleitung der im Koaleszenzabscheider gereinigten Kurbelgehäusegase in den Ansaugtrakt bzw. den Verbrennungsprozess der Brennkraftmaschine durch eine Leitung statt. In einer vorteilhaften Ausführungsform weist das Kurbelgehäuseentlüftungssystem ein Überdruckventil zum Schutz des Kurbelgehäuses vor Überdrücken und/oder ein Druckregelventil zur Regelung des Drucks im Kurbelgehäuse auf.

Zur Bestimmung vorteilhafter Eigenschaften des vorliegend beschriebenen Koaleszenzfiltermediums haben sich nachstehende Normen und Messverfahren als geeignet erwiesen. Angegebene Werte sind mit diesen Vorschriften bestimmt bzw. bestimmbar: Materialdicke analog ISO 534, jedoch mit einer Belastung von 10kPa; Flächenmasse nach DIN EN ISO 536; Luftdurchlässigkeit nach DIN EN ISO 9237 bei 200Pa (Gesamtluftdurchlässigkeit entspricht der Luftdurchlässigkeit der Einzellage dividiert durch die Lagenanzahl); Faser-Durchmesserverteilung in Anlehnung an DIN 53811:1970-07 in Mikroprojektion der Längsansicht auf Basis von ca. 300 vermessenen Fasern; mittlerer Faserdurchmesser ist anzahlgewichtet.

### Kurze Beschreibung der Zeichnungen

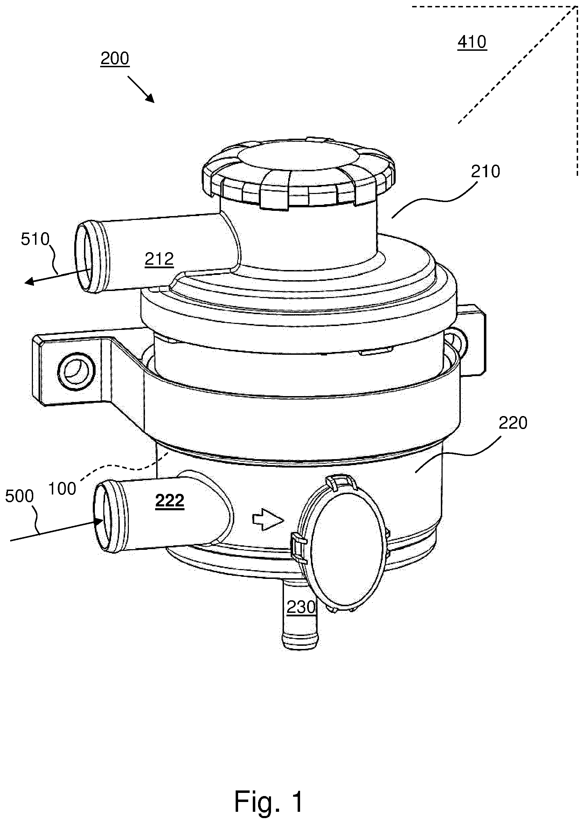

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 nachgeordneten Ansprüche verwiesen, andererseits werden weitere Ausgestaltungen, Merkmale und Vorteile der vorliegenden Erfindung nachstehend unter anderem anhand des durch die Figuren 1 bis 3 veranschaulichten Ausführungsbeispiels sowie weiterer Beispiele näher erläutert. Es zeigt:
- Fig. 1: in perspektivischer Darstellung ein Ausführungsbeispiel für ein K[urbel]G[ehäuse]E[ntlüftungs]-System mit einem Koaleszenzabscheider gemäß der vorliegenden Erfindung;
- Fig. 2: in Längsschnittdarstellung das K[urbel]G[ehäuse]E[ntlüftungs]-System aus Fig. 1;
- Fig. 3: in Längsschnittdarstellung eine Detailansicht des Koaleszenzabscheiders aus Fig. 2; und
- Fig. 4: in Schnittdarstellung eine Detailansicht eines weiteren Koaleszenzabscheiders.

### Ausführungsform(en) der Erfindung

Figur 1 zeigt in einer perspektivischen Ansicht ein nur schematisch angedeutetes Kurbelgehäuse 410, welches einen Koaleszenzabscheider 200 eines K[ur-bel]G[ehäuse]E[ntlüftungs]-Systems umfasst. Das Kurbelgehäuse 410 ist Bestandteil einer Brennkraftmaschine. Die Brennkraftmaschine kann in einem Kraftfahrzeug verbaut sein. Der Koaleszenzabscheider 200 ist als Koaleszenzabscheider für ölhaltige Luft aus einem Innenraum des Kurbelgehäuses 410 ausgebildet. Die ölhaltige Luft ist bei derartigen Anwendungen meist versetzt mit Verbrennungsgasen, die aus den Zylindern als Leckagegas in das Kurbelgehäuse austreten. Diese Mischung wird regelmäßig auch als Kurbelgehäusegas bezeichnet, wobei vorliegend zur Vereinfachung der Begriff Luft weiter Verwendung findet.

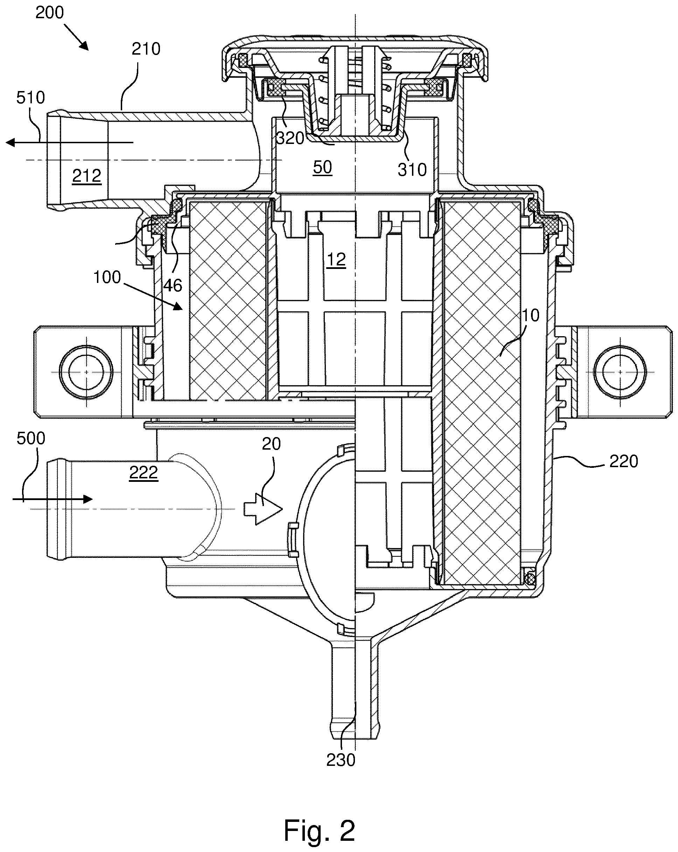

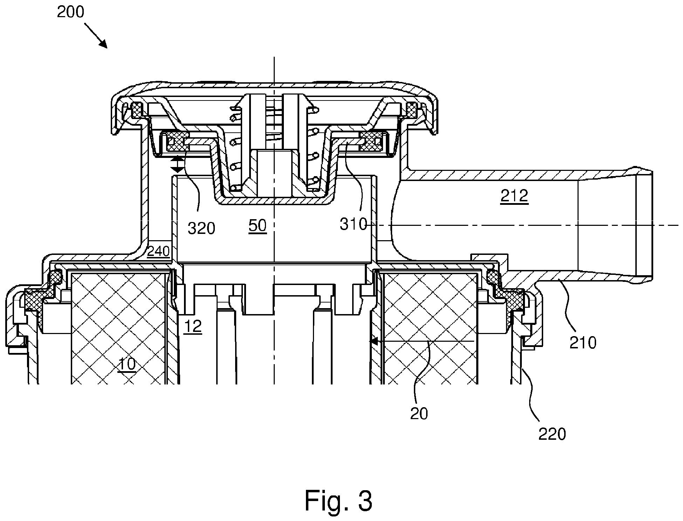

Der Koaleszenzabscheider 200 umfasst ein im Wesentlichen ovalzylindrisches, insbesondere kreiszylindrisches Gehäuse, welches sich aus einem ersten Gehäuseteil 210, nämlich einem Gehäusedeckel, und einem zweiten Gehäuseteil 220, nämlich einem Gehäusekörper, zusammensetzt. Das zweite Gehäuseteil 220 weist einen Einlass 222 für die ölhaltige Luft 500 auf. In dem Gehäuse ist ein insbesondere auswechselbar einsetzbares Abscheideelement 100 angeordnet, welches mindestens einen Mehrlagenaufbau 10 aus spiralförmig, mehrlagig gewickeltem Koaleszenzfiltermedium umfasst, siehe Fig. 2. In anderen Ausführungen ist ein Stapel denkbar. Das Abscheideelement 100 ist in Fig. 1 durch das Gehäuse verdeckt und daher mit einer gestrichelten Bezugszeichenlinie versehen. Innerhalb des Gehäuses 210, 220 wird die Luft 500 (ein entsprechender Luftstrom 20 ist in Fig. 3 durch einen Pfeil angedeutet) mittels des Mehrlagenaufbaus 10 des Koaleszenzfiltermediums gereinigt. Die entstehende Reinluft 510 wird aus einem von dem Mehrlagenaufbau 10 umschlossenen Innenraum 12 (Figur 2) über ein Reinluftableitelement 50 des Abscheideelements 100 zu einem Reinluftauslass 212 des Gehäusedeckels 210 und vom Reinluftauslass 212 zurück in den Ansaugtrakt der Brennkraftmaschine geführt. Abgeschiedenes Öl wird über einen Ölauslass 230 abgeführt.

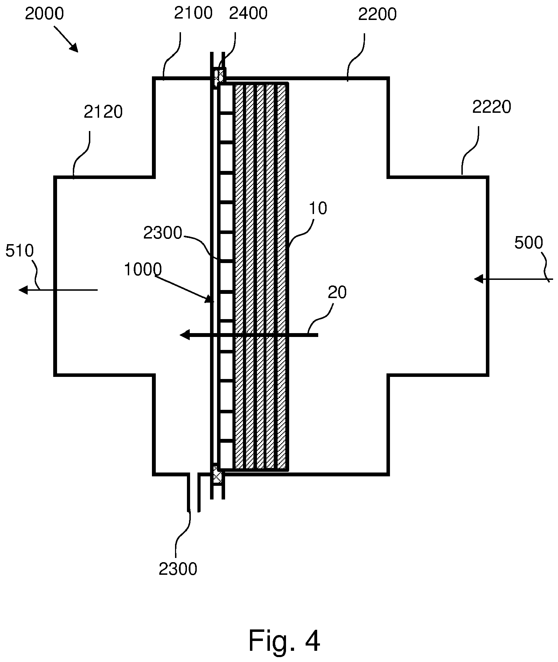

Um den Kurbelgehäuseunterdruck auf einen definierten Wert zu begrenzen, weist der Koaleszenzabscheider 200 ein Druckregelventil auf. Das beispielsweise in Figuren 2 und 3 dargestellte Druckregelventil hat einen Ventilschließkörper 310, der von einem Ventilschließkörper-Dichtelement 320, bevorzugt wie hier gezeigt von einer Membran, umgeben ist. Derartige Ventile sind auch mit dem in Fig. 4 schematisch gezeigten und nachfolgend beschriebenen Koaleszenzabscheider 200 kombinierbar.

Der Koaleszenzabscheider 2000 umfasst ein bevorzugt öffenbares Gehäuse, welches sich aus einem ersten Gehäuseteil 2100, nämlich einem Gehäusedeckel, und einem zweiten Gehäuseteil 2200, nämlich einem Gehäusekörper, zusammensetzt. Das zweite Gehäuseteil 2200 weist einen Einlass 2220 für die ölhaltige Luft 500 auf. In dem Gehäuse ist ein insbesondere auswechselbar einsetzbares Abscheideelement 1000 angeordnet, welches mindestens einen Mehrlagenaufbau 10 aus mehrlagig gestapeltem Koaleszenzfiltermedium, eine zwischen den Gehäuseteilen 2100, 2200 dichtend verspannte Dichtung 2400 und einen mit der Dichtung 2400 und dem Mehrlagenaufbau 10 fest verbundenen Stützrahmen 2300 umfasst. In anderen Ausführungen ist ein Wickel denkbar. Innerhalb des Gehäuses 2100, 2200 wird die Luft 500 (ein entsprechender Luftstrom 20 ist durch einen Pfeil angedeutet) mittels des Mehrlagenaufbaus 10 des Koaleszenzfiltermediums gereinigt. Die entstehende Reinluft 510 wird aus einem in der Figur links vom Abscheideelement 1000 angeordneten Reinraum über den Reinluftauslass 2120 des Gehäusedeckels 2100 zurück in den Ansaugtrakt der Brennkraftmaschine geführt. Abgeschiedenes Öl wird über einen Ölauslass 2300 abgeführt.

### Beispiele

Es wurden Ausführungsformen eines erfindungsgemäßen Koaleszenzabscheiders mit drei verschiedenen anderen Aufbauten verglichen. Dabei wurden verschiedene Koaleszenzfiltermedien verwendet. Abscheidegrade wurden anhand von einem Aerosol mit einer volumengewichteten mittleren Tropfengröße von ca. 1,1 µm ermittelt. Die Beispiele wurden hinsichtlich der jeweiligen Lagenanzahl mit dem Ziel konfiguriert, dass der Druckverlust bei ca. 20 cm/s Anströmgeschwindigkeit im Bereich von 20 mbar angesiedelt ist. Dabei wird deutlich, dass die Vergleichsbeispiele ein vergleichsweise geringes Produkt aus Flächenmasse und Luftdurchlässigkeit aufweisen und eine geringe Leistungsfähigkeit in Bezug auf das Verhältnis Druckverlust und Abscheidegrad. Diese wird auch oft mit einem Qualitätsfaktor (Quality Factor) angegeben, der wie folgt berechnet wird:
Q_{f} = ln(1/P)/deltaP, wobei P = Penetration = (1-Abscheidegrad) und wobei deltaP = Druckdifferenz).

| **Beispiele** | Koaleszenzfiltermedium | | Flächenmasse | Luftdurchlässigkeit | Dicke | | Produkt Flächenmasse*Luftdurchlässigkeit | |
|---|---|---|---|---|---|---|---|---|
| | | | g/m² | L/m²s | mm @ 10kPa | | g/(m*s) | |
| Beispiel 1 | Glasfaserpapier mit ca. 95% Glasfasern | | 108 | 1632 | 1,14 | | 176 | |
| Beispiel 2 | Glasfaserpapier mit ca. 95% Glasfasern | | 220 | 723 | 1,96 | | 159 | |
| | | | | | | | | |

| **Vergleichsbeispiele** | | | | | | | | |
|---|---|---|---|---|---|---|---|---|
| | | | | | | | | |
| Vergleichsbeispiel 1 | Glasfaserpapier mit ca. 95% Glasfasern | | 71 | 672 | 0,7 | | 48 | |
| Vergleichsbeispiel 2 | Glasfaserpapier mit ca. 95% Glasfasern | | 65 | 1212 | 0,56 | | 79 | |
| Vergleichsbeispiel 3 | Glasfaserpapier mit ca. 95% Glasfasern | | 75 | 817 | 0,64 | | 61 | |
| | | | | | | | | |

| **Beispiele** | | Anteil von Fasern kleiner 3µm | Lagen | Abscheideqrad | | Druckdifferenz | | Quality Factor |
|---|---|---|---|---|---|---|---|---|
| | | | | % | | mbar | | 1/kPa |
| Beispiel 1 | | <10% | 5 | 86,2 | | 17,8 | | 1,11 |
| Beispiel 2 | | <10% | 6 | 92 | | 19,3 | | 1,31 |
| | | | | | | | | |

| **Vergleichsbeispiele** | | | | | | | | |
|---|---|---|---|---|---|---|---|---|
| | | | | | | | | |
| Vergleichsbeispiel 1 | | Ca. 30% | 4 | 87,1 | | 23,8 | | 0,86 |
| Vergleichsbeispiel 2 | | Ca. 30% | 4 | 85,1 | | 24,8 | | 0,76 |
| Vergleichsbeispiel 3 | | Ca. 30% | 13 | 89,2 | | 25,6 | | 0,87 |

Beispiel 1 und 2 sind jeweils Koaleszenzabscheider gemäß der Erfindung, die mit zwei verschiedenen Ausführungen eines Koaleszenzfiltermediums ausgeführt sind, die sich im Wesentlichen in Bezug auf das Flächengewicht unterscheiden. Beide weisen einen Glasfaseranteil von 95% auf, wobei der Rest eine veraschbare Bindermischung ist. Jeweils 90% der im Koaleszenzfiltermedium enthaltenen Glasfasern des Koaleszenzfiltermediums weisen einen Faserdurchmesser zwischen 3 und 7,5 µm und einen mittleren Faserdurchmesser (d50) zwischen 5 und 6 µm auf. Es wird deutlich, dass bei beiden Varianten über (Beispiel 2) oder annähernd (Beispiel 1) ein Abscheidegrad von 90% bei einem Druckverlust unter 20 mbar erreicht wird. Entsprechend wird in beiden Varianten ein Qualitätsfaktor von größer 1 erreicht. Beispiel 2 ist im Vergleich zu Beispiel 1 noch etwas besser herstellbar, da die verwendete Ausführung des Koaleszenzfiltermediums unempfindlicher bei der Verarbeitung ist. Hierbei und insbesondere bei der Verarbeitung von Glasfaserpapieren mit einem hohen Glasfaseranteil wie in den vorliegenden Beispielen von über 90 % der Gesamtmasse kann die Verwendung von Koaleszenzfiltermedien mit einem Flächengewicht von über 150 g/m², bevorzugt über 180 g/m² eine gute Prozesssicherheit und damit eine schnelle Fertigung ermöglichen. Im Einzelfall kann es vorteilhaft für die Herstellung eines erfindungsgemäßen Mehrlagenaufbaus in Serienproduktionsumgebungen sein, insbesondere bei der Herstellung gewickelter Ausführungen, das Koaleszenzfiltermedium mit einer nicht abscheidewirksamen Trägerschicht zu versehen. Dadurch kann das Koaleszenzfiltermedium höheren Zugkräften und Geschwindigkeiten bei der Herstellung ausgesetzt werden. Die Trägerschicht kann aufkaschiert sein und sollte, insbesondere um die Homogenität der Abscheidestruktur über den Mehrlagenaufbau nicht wesentlich zu beeinflussen, im Vergleich zum Glasfaserpapier wesentlich dünner (mindestens viermal dünner, bevorzugt mit einer Dicke kleiner 0,25 mm) und permeabler (mindestens dreimal permeabler, bevorzugte Mindestluftdurchlässigkeit 5000 l/m²s) sein. Hierfür kann beispielsweise ein dünnes Spinnvlies mit beispielsweise ca. 0,2 mm Dicke und mit hoher Luftdurchlässigkeit von beispielsweise ca. 6500 l/m²s verwendet werden. Bevorzugt sind jedoch trägerschichtfreie Koaleszenzfiltermedien.

Obwohl die Vergleichsbeispiele eine Luftdurchlässigkeit in ähnlicher Größenordnung wie die o.g. Beispiele zeigen, weisen sie ein geringeres Produkt aus Flächenmasse und Luftdurchlässigkeit auf. Es wird ferner deutlich, dass schon bei geringer Lagenanzahl (Vergleichsbeispiele 1 und 2) ein Differenzdruck von über 20 mbar entsteht und kein Abscheidegrad von 90% erreicht wird. Im Vergleichsbeispiel 3 wird zwar ein Abscheidegrad von nahezu 90% erreicht, jedoch zulasten des Druckverlusts, der in diesem Vergleichsbeispiel 3 über 25 mbar liegt. Allen ist ein im Vergleich zu den o.g. Beispielen ein deutlich schlechterer Qualitätsfaktor von unter 0,9 gemein.

Daraus wird im Vergleich ersichtlich, dass ein Feinfaseranteil von deutlich kleiner als 30%, genauer ein vergleichsweise geringer Anteil an Fasern mit einem Durchmesser kleiner 3 µm, einen wesentlichen Beitrag zum Erreichen einer in Bezug auf Abscheidegrad und Druckverlust optimierten Struktur leisten kann. Der Effekt ist wie gezeigt bei einem Anteil kleiner 10% deutlich, jedoch ist auch bei einem Anteil kleiner 20% eine deutliche Verbesserung zu erwarten.

## Patentansprüche

1. Koaleszenzabscheider zur Abscheidung von Flüssigkeitströpfchen aus einem Gasstrom, insbesondere zur Verwendung in einem Kurbelgehäuseentlüftungssystem, der Koaleszenzabscheider umfassend: einen Gaseinlass; einen Gasauslass; und einen zwischen dem Gaseinlass und dem Gasauslass angeordneten Mehrlagenaufbau eines Koaleszenzfiltermediums, wobei mindestens 90% der Glasfasern des Koaleszenzfiltermediums einen Faserdurchmesser größer 2,5 µm aufweisen.

2. Koaleszenzabscheider nach einem der vorhergehenden Ansprüche, wobei die Gesamtluftdurchlässigkeit des Mehrlagenaufbaus zwischen 350 und 15 l/m²s, bevorzugt zwischen 200 und 15 l/m²s und besonders bevorzugt zwischen 180 und 30 l/m²s liegt, und/oder
wobei die Luftdurchlässigkeit der Einzellage des Koaleszenzfiltermediums größer 350 l/m²s, bevorzugt größer 600 l/m²s beträgt, und/oder
die Luftdurchlässigkeit der Einzellage des Koaleszenzfiltermediums kleiner 1800 l/m²s ist.

3. Koaleszenzabscheider nach einem der vorhergehenden Ansprüche, wobei das Produkt aus Luftdurchlässigkeit und Flächenmasse einer Einzellage des Koaleszenzfiltermediums zwischen 110 und 220 g/m*s, bevorzugt zwischen 140 und 180 g/m*s beträgt.

4. Koaleszenzabscheider nach einem der vorhergehenden Ansprüche, wobei die Glasfasern im Koaleszenzfiltermedium einen Massenanteil von mindestens 90%, bevorzugt mindestens 93%, besonders bevorzugt mindestens 95% aufweisen.

5. Koaleszenzabscheider nach einem der vorhergehenden Ansprüche, wobei der Masseanteil veraschbarer Materialien im Koaleszenzfiltermedium max. 10%, bevorzugt max. 7%, besonders bevorzugt max. 5% beträgt.

6. Koaleszenzabscheider nach einem der vorhergehenden Ansprüche, wobei das Koaleszenzfiltermedium einen Binder mit einem Masseanteil von max. 10%, bevorzugt max. 7%, besonders bevorzugt max. 5% aufweist, der bevorzugt keine Bi-Komponentenfasern, besonders bevorzugt keine Schmelzfasern, aufweist und beispielsweise ein Acrylatbinder ist.

7. Koaleszenzabscheider nach einem der vorhergehenden Ansprüche, wobei die Flächenmasse der Einzellage des Koaleszenzfiltermediums größer 100 g/m², bevorzugt größer 150 g/m², besonders bevorzugt größer 180 g/m² beträgt.

8. Koaleszenzabscheider nach einem der vorhergehenden Ansprüche, wobei mindestens 90% einen Faserdurchmesser größer 3 µm aufweisen, oder mindestens 95% der Glasfasern des Koaleszenzfiltermediums einen Faserdurchmesser grö-ßer 2,5 µm, bevorzugt größer 3 µm aufweisen.

9. Koaleszenzabscheider nach einem der vorhergehenden Ansprüche, wobei mindestens 90% der Glasfasern des Koaleszenzfiltermediums einen Faserdurchmesser kleiner 10 µm, bevorzugt kleiner 8 µm aufweisen.

10. Koaleszenzabscheider nach einem der vorhergehenden Ansprüche, wobei die Glasfasern des Koaleszenzfiltermediums einen mittleren Faserdurchmesser zwischen 4 und 6 µm, bevorzugt zwischen 4,5 und 6 µm, besonders bevorzugt zwischen 5 und 6 µm aufweisen.

11. Koaleszenzabscheider nach einem der vorhergehenden Ansprüche, wobei die feinste Abscheidestufe des Koaleszenzabscheiders durch den Mehrlagenaufbau und/oder das Koaleszenzfiltermedium gebildet ist.

12. Koaleszenzabscheider nach einem der vorhergehenden Ansprüche, wobei der Mehrlagenaufbau und/oder das Koaleszenzfiltermedium die die Effizienz des Koaleszenzabscheiders bestimmende Abscheidestufe bilden.

13. Koaleszenzabscheider nach einem der vorhergehenden Ansprüche, wobei der Mehrlagenaufbau zwei oder mehr verschiedenartige Koaleszenzfiltermediumlagen aufweist, wobei jede der Lagen eine Einzellagendicke von mehr als 0.8 mm und maximal 5 mm, eine Flächenmasse der Einzellage von größer 80 g/m² und kleiner 500 g/m² und eine Luftdurchlässigkeit der Einzellage von 350-1800 l/m²s aufweist.

14. Kurbelgehäuseentlüftungssystem umfassend einen Koaleszenzabscheider nach einem der vorhergehenden Ansprüche.

15. Verwendung eines Koaleszenzabscheiders nach einem der vorhergehenden Ansprüche 1 bis 13 in einem insbesondere geschlossenen Kurbelgehäuseentlüftungssystem einer Brennkraftmaschine, bevorzugt ohne weiteren Feinabscheider oder weitere Feinabscheidelage.
